# EUROPÄISCHE PATENTANMELDUNG

(11) **EP 3 282 109 A1**
(43) Veröffentlichungstag der Anmeldung: **14.02.2018**
(21) Anmeldenummer: 16184111.9
(22) Anmeldetag: 12.08.2016
(51) Int. Cl.: F02B 33/42, F04B 45/04, F04B 43/00

(54) **ABGASSTRANG EINES VERBRENNUNGSMOTORS UND VERWENDUNG DES ABGASSTRANGS**

(71) Anmelder: Hofmann, Arno, 63571 Gelnhausen (DE)
(72) Erfinder: Hofmann, Arno, 63571 Gelnhausen (DE)
(74) Vertreter: Walkenhorst, Andreas

(57) **Zusammenfassung**

Ein Abgasstrang (20) für einen Verbrennungsmotor (1), mit einer zu einer Auspuffanlage (12) führenden Abgasleitung (26), von der eine mit der Primärseite einer Abgasladepumpe (32) verbundene Stichleitung (30) abzweigt, soll die Vorteile beim wirkungsgradsteigernden Einsatz der Abgasladepumpe (32) für den Verbrennungsmotor (1) in besonders weitgehendem Umfang nutzbar machen. Dazu ist erfindungsgemäß in die Stichleitung (30) eine Strömungsdiode (60, 60', 60") geschaltet, die für ein zur Abgasladepumpe (32) hin strömendes Fluid einen niedrigeren Strömungswiderstand aufweist als für ein von der Abgasladepumpe (32) abströmendes Fluid.

## Beschreibung

Die Erfindung bezieht sich auf einen Abgasstrang für einen Verbrennungsmotor mit einer zu einer Auspuffanlage führenden Abgasleitung, von der eine mit der Primärseite einer Abgasladepumpe verbundene Stichleitung abzweigt. Sie betrifft weiter die Verwendung eines solchen Abgasstrangs.

Ein derartiger Abgasstrang ist aus den EP 2 846 019 A1 und EP 2 846 020 A1 oder auch aus der nicht vorveröffentlichten Europäischen Patentanmeldung EP 15 15 7064 bekannt. Bei dem dort jeweils beschriebenen Konzept werden durch den Einsatz einer vorzugsweise als Membranpumpe ausgeführten Abgasladepumpe im Abgasstrang eines Verbrennungsmotors dessen Wirkungsgrad, Leistungsabgabe und/oder Effizienz deutlich gesteigert. Die Offenbarung dieser Anmeldungen, insbesondere betreffend die Ausgestaltungen der einzelnen Motorenkonzepte, die Einbindung und Ausgestaltung der als Abgasladepumpe vorgesehenen Membranpumpen sowie die jeweiligen Betriebsweisen, wird ausdrücklich mit einbezogen ("incorporation by reference").

Bei dem aus den genannten Anmeldungen bekannten Konzept erfolgt der Antrieb der Membranpumpe durch Pulsationen bzw. Druckschwankungen eines Antriebsgases, insbesondere des im Abgasstrang des Verbrennungsmotors geführten Abgases, das in die Primärseite der Membranpumpe geleitet wird und seinen Impuls über die Membran auf das in der dem Antriebsgas gegenüberliegenden Sekundärseite der Membranpumpe vorgehaltene Fördergas überträgt. Insbesondere soll die Membranpumpe kurzzeitig auftretende Gaspulsationen des Antriebsgases, so wie sie beispielsweise in Abgasleitungen von Verbrennungsmotoren auftreten, wirkungsvoll in die Kompression von Fördergas umsetzen, wobei das Fördergas in dieser Anwendung vorteilhafterweise die vom Motor für die Verbrennung anzusaugende Frischluft darstellt. Die Membranpumpe arbeitet somit in diesem Konzept als Luftverdichter, der zur Aufladung bzw. zur Wirkungsgradsteigerung des Verbrennungsmotors genutzt werden kann.

Die Membranpumpe weist dabei eine Zuleitung zum Arbeitsraum der Antriebsseite oder Primärseite auf, durch die das Antriebsgas hinein- und herausströmen kann. Die Zuleitung ist dabei eine Stichleitung, in der das Antriebsgas hin und her pulsiert. Auf der Sekundär- oder Fördergasseite befinden sich mindestens ein Zuströmventil, durch das das Fördergas ausschließlich in den Arbeitsraum oder die Sekundärseite von außen einströmen kann, und mindestens ein Abströmventil, durch das das Fördergas ausschließlich aus dem Arbeitsraum ausströmen kann. Zu- und Abströmventil arbeiten dabei jeweils als selbsttätig steuernde Rückschlagventile. Die Membran wird dabei durch Eigenvorspannung und/oder durch eine externe Kraft, wie beispielsweise die einer oder mehrerer Federn, in einer Ruheposition gehalten, die der maximalen Auslenkung der Membran in Richtung der Antriebsseite entspricht, so dass sich in dieser Membranstellung ein maximales Volumen auf der Förder- oder Sekundärseite und ein minimales auf der Antriebs- oder Primärseite ergibt.

Strömt nun eine Druckwelle durch die Zuleitung in den Arbeitsraum der Primärseite der Membranpumpe, so überträgt sie ihre kinetische Energie durch Impulsübertragung bzw. Druckaufbau des Antriebsgases im Arbeitsraum auf die Membran. Die Membran wölbt sich durch den erbrachten Energieeintrag des Antriebsgases und verringert das Volumen des Arbeitsraums der Sekundärseite und somit des Fördergases, bis die Membran an der Innenkontur des Pumpengehäuses anliegt. Dies ist mit einem Druckanstieg des Fördergases auf der Sekundärseite der Membranpumpe verbunden, so dass dieses durch das Abströmventil aus der Membranpumpe ausgeschoben wird. Bei abnehmendem Druck des Antriebsgases drückt die (Feder-) Vorspannung auf die Membran diese wieder in ihre Ruheposition und saugt dabei Fördergas durch das Zuströmventil in die Sekundärseite an. Gleichzeitig wird das Antriebsgas durch die Stichleitung, durch die es zuvor in den Arbeitsraum der Primärseite eingeströmt ist, wieder ausgeschoben. Die Abgassäule wird somit aus der Stichleitung wieder in die eigentliche Abgasleitung zurückgeschoben, und das solchermaßen zurückgeschobene Abgas wird dann über die Abgasleitung dem Auspuffsystem zugeleitet.

Durch dieses Konzept ist auf besonders einfache Weise die Nutzung von Druckpulsen im Abgasstrang des Verbrennungsmotors zur Kompression und/oder Vorverdichtung des Frischgases und damit zur Leistungs- oder Effizienzsteigerung des Verbrennungsmotors ermöglicht.

Der Erfindung liegt nunmehr die Aufgabe zu Grunde, einen Abgasstrang der oben genannten Art anzugeben, mit dem die genannten Vorteile insbesondere beim wirkungsgradsteigernden Einsatz der Abgasladepumpe für einen Verbrennungsmotor noch weiter gesteigert werden können. Des Weiteren soll eine Verwendung des Abgasstrangs angegeben werden, mit der die erzielten Wirkungsgrad-Vorteile besonders gut nutzbar gemacht werden können.

Bezüglich des Abgasstrangs wird diese Aufgabe erfindungsgemäß gelöst, indem in die von der Abgasleitung abzweigende und zur Abgasladepumpe führende Stichleitung eine Strömungsdiode geschaltet ist, die für ein zur Abgasladepumpe hin strömendes Fluid einen niedrigeren Strömungswiderstand aufweist als für ein von der Abgasladepumpe abströmendes Fluid.

Unter einer "Strömungsdiode" ist dabei allgemein ein Bauteil oder eine Bauteilauslegung zu verstehen, das - in Analogie zu einer elektrischen Diode - eine richtungsabhängige Charakteristik für den Strömungswiderstand für ein durchströmendes Fluid aufweist, wobei insbesondere in einer "Sperrrichtung" ein deutlich höherer Strömungswiderstand gegeben ist als in der entgegengesetzten "Durchgangsrichtung". Je nach Ausführung der Strömungsdiode können deren richtungsabhängige Strömungswiderstände bzw. Durchflusskoeffizienten konstante Werte besitzen, wenn es sich um statische Leitungseinbauten handelt, aber auch druck- bzw. zeit- bzw. motorphasenabhängige Werte annehmen, wenn dynamische Leitungseinbauten Verwendung finden.

Die Erfindung geht dabei von der Überlegung aus, dass konzeptgemäß die über die Stichleitung von der Abgasleitung aus zur Abgasladepumpe laufenden Abgasdruckwellen, möglichst ihren gesamten Impuls und entsprechend die gesamte kinetische Energie des Abgases in der Ladepumpe an den Energieübertrager (hier: Membran) abgeben sollten. Damit wird ein besonders hoher Wirkungsgrad des Energieaustausches in der Abgasladepumpe angestrebt. Wie sich jedoch überraschenderweise herausgestellt hat, kann es auf Grund von beispielsweise geometrischen Einbaubedingungen der Abgasladepumpe am Motor bzw. Fahrzeug zu ungünstigen Strömungsbedingungen des Abgases in der Abgasladepumpe kommen. Diese können als ungünstig angesehene Reflektionen der Abgasdruckwellen rückwärtig in die Impuls- oder Stichleitung zur Folge haben. Dadurch könnte ein Teil des in der Abgasdruckwelle mitgeführten Impulses bzw. der mitgeführten Energie für die Übertragung an die Membran in der Abgasladepumpe verloren gehen so dass der Wirkungsgrad der Abgasladepumpe vermindert wird. Reflektierte (zurücklaufende) Druckwellen aus der Abgasladepumpe zum Verbrennungsmotor hin könnten sich darüber hinaus nachteilig auswirken, wenn sie über die Impulsweiche in den offenen Auslasstrakt des Motors auf den Motorkolben während des Ausschiebetakts geraten und somit den Druck auf den Kolben erhöhen, was zu einer erhöhten vom Motor aufzubringenden Ausschiebearbeit führt.

Um dem gezielt entgegenzuwirken, sollten die über die Impulsweiche in die Stichleitung zur Abgasladepumpe einlaufenden Druckwellen zwar mit möglichst geringem Druckverlust zur Abgasladepumpe geführt werden. Andererseits sollten jedoch von der Abgasladepumpe zur Abzweigestelle von der Abgasleitung zurücklaufende Druckwellen möglichst durch höhere Strömungsverluste (Druckverluste) in der Stichleitung zum temporär längeren Verweilen in der Abgasladepumpe gezwungen werden. Ein solch erzwungener verlangsamter Druckabfall auf der Primärseite der Abgasladepumpe führt zu einer zeitlich verlängerten Impuls- und Energieübertragung auf die Membran, die zusätzlich noch durch das höhere Druckniveau in der Abgaskammer der Abgasladepumpe verstärkt wird. Der somit erzwungene erhöhte Energieaustausch auf die Membran steigert den Wirkungsgrad der Abgasladepumpe und verringert zumindest teilweise die Druckamplitude der zur Abgasleitung zurücklaufenden Druckwellen, womit einhergehend bei entsprechender Phasenlage des Ausschiebetakts auch die Ausschiebearbeit des Motorkolbens zur Steigerung des Motorwirkungsgrads verringert wird.

Hierzu ist vorgesehen, die Stichleitung für einen richtungsabhängig unterschiedlichen Strömungswiderstand auszulegen. Dabei kann die Stichleitung als Ganzes in der Art einer derartigen Strömungsdiode ausgestaltet sein, und/oder es können zusätzliche Bauteile wie beispielsweise Einbauten vorgesehen sein, die die Ausbildung der gewünschten diodenartigen Strömungseigenschaften der Stichleitung bewirken.

Der Effekt der "erzwungenen längeren Verweildauer der Abgasdruckwelle in der Abgasladepumpe" wird bevorzugt durch Leitungseinbauten mit richtungsabhängigen Durchflusskoeffizienten in der Stichleitung erreicht. Eine besonders bevorzugte Positionierung derartiger Leitungseinbauten in räumlicher Nähe zur Abgasladepumpe, also insbesondere beim ladepumpenseitigen Ende der Stichleitung, bewirkt ein Verweilen des hohen Abgasdruckniveaus nahe der Membran, so dass der Energieaustausch an die Membran ohne Zeitverzug fortgesetzt werden kann. Die Positionierung der Leitungseinbauten nahe der Impulsweiche bzw. der Abzweigstelle von der Abgasleitung begünstigt hingegen ein Zurücklaufen der Druckwelle aus der Abgasladepumpe, was zu einem nicht gewünschten Druckabfall in der Abgasladepumpe führt. Die reflektierte, aus der Abgasladepumpe herauslaufende Druckwelle durchläuft die Stichleitung bis zu den Leitungseinbauten, um an diesen zumindest teilweise wieder reflektiert zu werden und zeitlich verzögert nochmals in der Abgasladepumpe einzutreffen, jedoch mit verringerter Amplitude. Die verzögerte Phasenverschiebung der an den Leitungseinbauten reflektierten Druckwellenamplitude korreliert bei hohen Arbeitsfrequenzen der Abgasladepumpe häufig nicht mit der Membranbewegung. Aus diesem Grund und der Tatsache, dass die Leitungseinbauten nahe der Impulsweiche hohen Abgastemperaturen ausgesetzt sind, ist die pumpennahe Positionierung der Leitungseinbauten besonders bevorzugt nahe der Stelle vorgesehen, an der die Stichleitung in den abgasseitigen Deckel der Abgasladepumpe mündet.

Um die angestrebte Verbesserung des Motorwirkungsgrads besonders zuverlässig nutzbar zu machen, ist die Abgasladepumpe vorteilhafterweise sekundärseitig in eine ausgangsseitig mit einem Brennraum eines Zylinders des Verbrennungsmotors verbundene Frischgasleitung geschaltet.

Die Ausgestaltung der Stichleitung als Strömungsdiode kann mithilfe statischer Einbauten in die Stichleitung erfolgen. In einer bevorzugten Ausgestaltung weist dabei die Stichleitung zur Bildung der Strömungsdiode eine integrierte Düse mit sich in Längsrichtung der Stichleitung gesehen zur Abgasladepumpe hin verringerndem Querschnitt auf. Die Düse sollte vorzugsweise beim Ausströmen aus der Abgasladepumpe hinterspült werden können bzw. zumindest einen blendenförmigen Querschnittssprung darstellen, um durch die radial zur Düsenachse laufende Seitenströmung eine möglichst ausgeprägte Strahlkontraktion am kleinen Düsenquerschnitt hervorzurufen. Die Düse mit fortlaufender Querschnittsverengung in Richtung zur Abgasladepumpe hin stellt dabei ein Leitungselement dar, das beim Durchströmen einen verhältnismäßig geringen Druckverlust in Richtung zur Abgasladepumpe aufweist, insbesondere wenn in einer besonders bevorzugten Ausgestaltung die Düse in Form eines Kegelstumpfs mit einem Düsenwinkel (Kegelwinkel) im strömungsgünstigen Bereich zwischen 10°-35° ausgeführt ist.

Die Düse ist dabei vorteilhafterweise am Ende der Stichleitung nahe der Abgasladepumpe als dünnwandiger Kegel eingesetzt und entspricht mit ihrem Eingangsdurchmesser etwa dem Durchmesser der Stichleitung. Nach dem Verlassen der Düse weitet sich die kontrahierte Strömung als freier Strahl wieder auf, bis er an den nachfolgenden Wänden der Abgasladepumpe weitergeführt wird. Der kleinste effektive Strömungsquerschnitt im düsennahen Bereich entspricht dabei recht genau der Fläche der Düsenaustrittsöffnung. Betrachtet man nun das Verhalten einer in der Abgasladepumpe reflektierten Druckwelle, wie diese auf die Düse trifft, so ist festzustellen, dass die Druckwelle auf einen abrupt reduzierten Strömungsquerschnitt (kleiner Düsenquerschnitt) trifft und sich unter Zuhilfenahme des Hinterspülens des Totraums zwischen Düsenaußenmantel und Stichleitung eine Umkehrspülung einstellt, die eine verstärkte Strömungskontraktion am kleinen Düsenquerschnitt zur Folge hat. Der effektive Strömungsquerschnitt der Düse beim Ausströmen aus der Abgasladepumpe ist daher wesentlich kleiner als derjenige beim Einströmen und maßgeblich für die unterschiedlichen Durchflusskoeffizienten der Düse verantwortlich. Angestrebt wird bevorzugt ein großes richtungsabhängiges Verhältnis der effektiven Strömungsquerschnitte, um den gewünschten "Diodencharakter" der Abgasströmung an der Abgasladepumpe zu erzeugen.

Hinsichtlich der Dimensionierung der Düsenausgangsquerschnittsfläche bezogen auf die Düseneingangsquerschnittsfläche haben sich Werte als vorteilhaft erwiesen, die zwischen 50-75% liegen, primär abhängig von dem angeschlossenen Verbrennungsmotor und dessen Parametern wie Zylinderzahl, Abgasstaudruck, Motordrehzahl, Höhe der Abgasdruckamplituden.

In alternativer oder zusätzlicher vorteilhafter Weiterbildung kann die Ausgestaltung der Stichleitung als Strömungsdiode aber auch mithilfe dynamischer Einbauten in die Stichleitung erfolgen. Dazu kann die Stichleitung beispielsweise in vorteilhafter Ausgestaltung zur Bildung der Strömungsdiode ein integriertes Rückschlagventil aufweisen.

Rückschlagventile, insbesondere selbstrückstellende Ventile, erlauben nämlich einen Medienfluss in ausschließlich eine Richtung. In entgegengesetzter Fließrichtung sperren diese Ventile vollkommen. Neben Teller- und Klappenventile zählen auch s.g. Flatter- bzw. Membranventile zu dieser Bauart, wobei besonders bevorzugt vorgesehene Flatterventile hohe Schaltfrequenzen ermöglichen.

In einer besonders bevorzugten Ausführungsform ist ein solches Rückschlagventil mit einem parallel laufenden Bypass kombiniert. Dadurch erhält man eine Leitungseinbaute, die bei entsprechender Anordnung in Fließrichtung von der Impulsweiche zur Abgasladepumpe das Rückschlagventil öffnet und somit den Fließquerschnitt des Rückschlagventils und den des Bypasses zur Verfügung stellt. Hingegen schließt das Rückschlagventil in "Rückwärtsrichtung", also bei Gasfluss aus der Abgasladepumpe zur Impulsweiche oder zur Abgasleitung, womit lediglich durch den Bypass ein Rückfluss stattfinden kann. Diese Konfiguration von Rückschlagventil und Bypass realisiert den angestrebten Effekt, den Abgasdruck in der Abgasladepumpe länger verweilen zu lassen, indem eine vorzeitige Reflektion der Druckwellen in der Abgasladepumpe zumindest vermindert wird. Die Strömungsquerschnitte von Rückschlagventil und Bypass sind frei wählbar und bevorzugt abhängig von den Betriebsparametern des angeschlossenen Verbrennungsmotors geeignet gewählt. Das Rückschlagventil kann aus mehreren Einzelventilen bestehen.

Das Zusammenwirken von Rückschlagventil und Bypass kann unter Verzicht einer externen Bypassleitung vorteilhaft in die Stichleitung integriert werden, indem nur ein Teil des Strömungsquerschnitts der Stichleitung durch das Rückschlagventil abgedeckt wird und der verbleibende Anteil des Strömungsquerschnitts als Bypass fungiert. Eine weitere Möglichkeit, Rückschlagventil und Bypass räumlich kompakt zu kombinieren, besteht in der Perforation des Rückschlagventiles, d.h. es wird durch Öffnungen im Ventilkörper eine gewünschte Leckage vorgesehen, die den Bypass in dessen Funktion ersetzt. Technisch vorteilhaft sind Flatterventile, deren Ventilplatten aus dünnem Stahlblech oder auch faserverstärkten Kunststoffen bestehen. Solche Rückschlagventile können problemlos am Ende der Stichleitung am Eintritt in den abgasseitigen Gehäusedeckel der Abgasladepumpe integriert werden, da in diesem Bereich entsprechende Flächen zur Unterbringung vorhanden sind und die Abgastemperatur auf niedrigem für Kunststoffe geeignetem Niveau liegen kann.

In weiterer alternativer oder zusätzlicher vorteilhafter Weiterbildung kann die Ausgestaltung der Stichleitung als Strömungsdiode aber auch mithilfe aktiver dynamischer Einbauten in die Stichleitung erfolgen. Dabei können insbesondere Ventile, die einen Fremdantrieb besitzen und synchron zur Phasenlage des angeschlossenen Verbrennungsmotors arbeiten, als Leitungseinbauten für die Stichleitung vorgesehen sein. Das bevorzugte Schaltschema beinhaltet dabei ein Öffnen der Strömungsquerschnitte der Stichleitung bei einlaufender Druckwelle zur Abgasladepumpe hin und ein teilweises, möglicherweise auch kurzzeitig vorübergehendes vollkommenes Schließen der Stichleitung bei nachfolgend auslaufender Druckwelle aus der Abgasladepumpe.

Die Ventilbauarten können bevorzugt oszillierender (Tellerventile) oder auch rotierender (Drehschieber) Bauart sein. Als Fremdantrieb bietet sich beispielsweise die mechanische Kopplung mit dem Verbrennungsmotor oder auch ein elektrischer Synchronantrieb an.

Vorteilhafterweise ist die Abgasladepumpe des Abgasstrangs als Membranpumpe ausgeführt. Die Membranpumpe umfasst dabei bevorzugt ein Druckgehäuse, dessen Innenvolumen über eine Anzahl von elastisch verformbaren Membranen in eine Mehrzahl von gasseitig voneinander getrennten Teilvolumina aufgeteilt ist, wobei die oder jede Membran derart mit einer Vorspannkraft beaufschlagt ist, dass im drucklosen Zustand das die Primärseite bildende Teilvolumen im Rahmen der Verformbarkeit der oder jeder Membran einen Minimalwert aufweist.

Vorteilhafterweise ist dabei eine Auslegung vorgesehen, bei der durch die Membranpumpe eine besonders hohe Steigerung von Effizienz und/oder Leistungsausbeute des Verbrennungsmotors erreicht werden kann, indem einerseits die inneren Verluste in der Membranpumpe konsequent gering gehalten werden und andererseits eine besonders hohe Agilität und Flexibilität des Membransystems in Reaktion auf die auftretenden Druckschwankungen sichergestellt wird. Dazu sollten insbesondere die bewegten Massen weitgehend gering gehalten werden. Um dies mit besonders einfachen Mitteln zu ermöglichen, sollte das zur Aufbringung der Vorspannkraft auf die Membran vorgesehene Federsystem möglichst unter Verzicht von Führungssystemen für die Feder und darüber hinaus in einem Konzept vorgesehen sein, das die Verwendung von Materialien vergleichsweise niedriger Dichte für die eigentliche Feder erlaubt. Dies ist durch die Verwendung einer bevorzugt vorgesehenen Blattfeder als Federtyp zu Aufbringung der Vorspannung ermöglicht.

Besonders bevorzugt wird der nach den vorstehend beschriebenen Kriterien ausgelegte Abgasstrang in einem Kraftfahrzeug und/oder in einem Zweirad verwendet.

Besonders bevorzugt wird der nach den vorstehend beschriebenen Kriterien ausgelegte Abgasstrang zudem für einen Einzylindermotor oder für einen Zweizylindermotor verwendet.

Ein Ausführungsbeispiel der Erfindung wird anhand einer Zeichnung näher erläutert. Darin zeigen:
- FIG. 1: schematisch einen Verbrennungsmotor mit zugeordnetem Abgasstrang, und
- FIG. 2-4: jeweils ausschnittsweise eine Stichleitung des Abgasstrangs gem. FIG. 1 im Längsschnitt.

Gleiche Teile sind in allen Figuren mit denselben Bezugszeichen versehen.

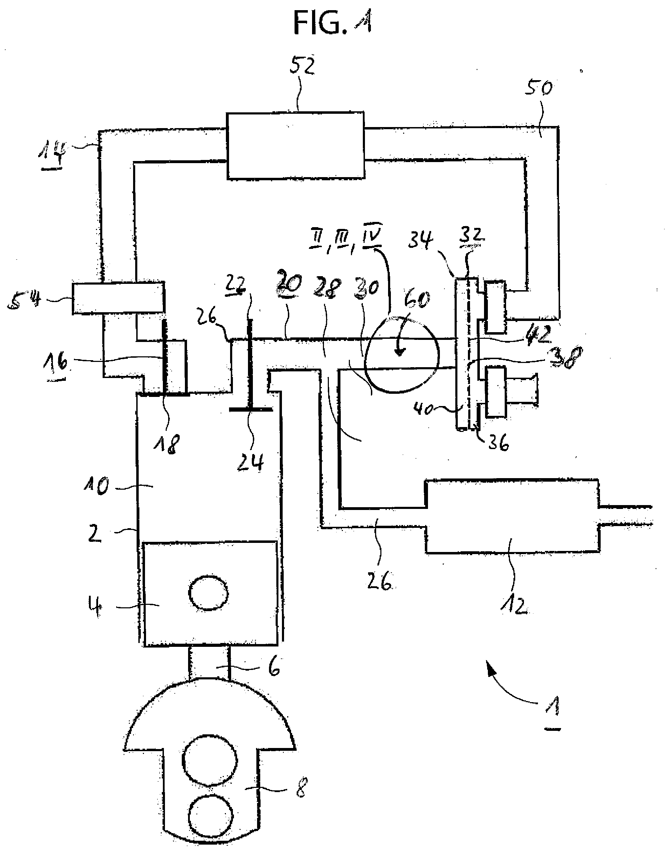

Der in FIG. 1 schematisch dargestellte Verbrennungsmotor 1 ist nach dem 4-TaktVerfahren ausgelegt. Er umfasst eine Anzahl von Zylindern 2, von denen in FIG. 1 lediglich einer dargestellt ist, und in denen jeweils ein Arbeitskolben 4 geführt ist. Der Arbeitskolben 4 wirkt über ein Pleuel 6 auf eine Kurbelwelle 8. Je nach Auslegung und Bauart des Verbrennungsmotors 1 können dabei auch der oder die Arbeitskolben 4 mehrerer oder aller Zylinder 2 auf eine gemeinsame Kurbelwelle 8 wirken.

Innerhalb des Zylinders 2 befindet sich in herkömmlicher Bauweise der Brennraum 10, in dem im Arbeitstakt des Zylinders 2 ein komprimiertes Brennstoff-LuftGemisch zur Verbrennung gebracht wird. In Reaktion hierauf führt der im Zylinder 2 verschiebbar angeordnete Arbeitskolben 4 einen Arbeitshub aus, wobei er die Kurbelwelle 8 arbeitsleistend antreibt. Nach der Vollendung des Arbeitshubs, also nach erfolgter Expansion des verbrannten Arbeitsgases im Zylinder 2 und kurz vor Erreichen des so genannten "unteren Totpunkts" (UT), wird das verbrannte Arbeitsgas als Abgas während eines Auslasstakts des Zylinders 2 einer auslassseitig an diesen angeschlossenen Auspuffanlage 12 zugeführt.

Für die zum Betrieb des Zylinders 2 erforderlichen Gaswechsel ist der Brennraum 10 gaseinlassseitig mit einem Gaseinlasssystem 14 und auslassseitig mit der Auspuffanlage 12 verbunden. Zur Steuerung der Gaswechsel im Brennraum 10 ist dabei der Brennraum 10 einerseits gegenüber dem Gaseinlasssystem 14 mittels eines Einlassventilsystems 16 absperrbar, das im Ausführungsbeispiel gem. FIG. 1 als Einlassventil 18 ausgeführt ist. Andererseits ist der Brennraum 10 gegenüber dem zur Auspuffanlage 12 führenden Abgasstrang 20 mittels eines Auslassventilsystems 22 absperrbar, das im Ausführungsbeispiel gem. FIG. 1 als Auslassventil 24 ausgeführt ist.

Der Verbrennungsmotor 10 ist gezielt für eine besonders hohe spezifische Leistungsausbeute und/oder einen besonders hohen Wirkungsgrad und damit geringen spezifischen Kraftstoffverbrauch ausgelegt. Dazu ist vorgesehen, dem aus dem Brennraum 10 während des Auslasstakts des jeweiligen Zylinders 2 abströmenden heißen Abgas zumindest einen Teil der ansonsten eigentlich ungenutzten Abgasenthalpie zu entziehen, um diese in den Wirkungsgrad steigernder Weise in mechanische Antriebsenergie und/oder Erhöhung der Frischgasluftdichte im Sinne einer Aufladung umzuwandeln. Dies soll erreicht werden, indem der während des Auslasstakts aus dem Brennraum 10 abströmenden Abgasdruckwelle in möglichst weitgehendem Umfang Impuls und/oder Energie entzogen und zur Vorverdichtung des dem Brennraum 10 zuströmenden Frischgases auf dieses übertragen wird.

Um dies zu ermöglichen, ist der Abgasstrang 20 verzweigt ausgeführt. Dabei zweigt von der den Brennraum 10 auslassseitig mit der Auspuffanlage 12 verbindenden Abgasleitung 26 an einer Verzweigungsstelle 28 eine Stichleitung 30 ab. Die Verzweigungsstelle 28 bildet eine Impulsweiche, die eingangsseitig mit dem Auslassventilsystem 22 und ausgangsseitig einerseits über die Stichleitung 30 mit der Primärseite einer als Abgasladepumpe vorgesehenen Membranpumpe 32 und andererseits mit der zur Auspuffanlage 12 führenden Abgasleitung 26 verbunden ist. Der Brennraum 10 ist somit auslassseitig über das Auslassventilsystem 22 und über die Verzweigungsstelle 28 sowohl mit der Auspuffanlage 12 als auch mit der Primärseite der Membranpumpe 32 verbunden.

Die Membranpumpe 32 ist entsprechend dem in den EP 2 846 019 A1 und EP 2 846 020 A1 oder auch aus der nicht vorveröffentlichten Europäischen Patentanmeldung EP 15 15 7064 beschriebenen Konzept aufgebaut; die Offenbarung dieser Anmeldungen, insbesondere betreffend die Ausgestaltung der als Abgasladepumpe vorgesehenen Membranpumpen sowie die jeweiligen Betriebsweisen, wird ausdrücklich mit einbezogen ("incorporation by reference"). Die Membranpumpe umfasst ein Druckgehäuse 34, dessen Innenvolumen 36 über eine elastisch verformbare Membran 38 in eine Mehrzahl - im dargestellten Ausführungsbeispiel zwei - von gasseitig voneinander getrennten Teilvolumina 40, 42 aufgeteilt ist.

Das Teilvolumen 40 bildet dabei die Primärseite der Membranpumpe 32 und ist gasseitig über die Stichleitung 30 und die Verzweigungsstelle 28 mit dem Auslassventilsystem 22 verbunden, so dass beim Öffnen des Auslassventils 24 die Druckwelle und der Impuls des Abgasstroms über Stichleitung 30 möglichst weitgehend in das die Primärseite bildende Teilvolumen 40 eingeleitet werden. In der Membranpumpe 32 trifft der (unmittelbar oder mittelbar eingeleitete) Impuls des Abgasstroms auf die Membran 38 und verformt diese durch Impulsübertragung. Das in der Primärseite der Membranpumpe 1 vorhandene Gas expandiert somit im sich vergrößernden Primärgasvolumen oder Teilvolumen 40 der Membranpumpe 32. Gleichzeitig wird auf der gegenüberliegenden Seite der Membran 38 Frischgas im sich verkleinernden Sekundär- oder Frischgasvolumen oder Teilvolumen 42 der Membranpumpe 1 komprimiert.

Durch diese im Ausführungsbeispiel gem. FIG. 1 gezeigte Schaltung ist somit die Nutzung der in der Membranpumpe 32 dem Abgas entzogenen Enthalpie zur Kompression und damit Vorspannung eines der Membranpumpe 32 sekundärseitig zugeführten Kaltgasstroms ermöglicht. Auslegungsgemäß soll dies zur Vorverdichtung des dem Brennraum 10 des Verbrennungsmotors 1 zugeführten Frischgasstroms genutzt werden. Dementsprechend ist im Ausführungsbeispiel gem. FIG. 1 die Membranpumpe 32 sekundärseitig in eine Frischgasleitung 50 geschaltet, die über einen im Ausführungsbeispiel vorgesehenen, ggf. nicht zwingend notwendigen Ladeluftkühler 52 geführt ist und ausgangsseitig über das Einlassventilsystem 16 mit dem Brennraum 10 des Zylinders 2 absperrbar verbunden ist. In der Membranpumpe 32 wird somit die auf der Primärseite in Expansionsarbeit umgewandelte Enthalpie des Abgases in Kompressionsenergie des in der Frischgasleitung 50 auf der Sekundärseite geführten Frischgases umgewandelt.

Später während des Auslasstakts, nach erfolgter Deformation der Membran 38, wird diese durch eine Rückstellkraft wieder in ihre Ausgangslage bewegt und schiebt das Abgas bzw. die in der Stichleitung 30 befindliche Gassäule über die Stichleitung 30 zur Verzweigungsstelle 28 zurück. Von dort gelangt das Abgas in der zweiten Taktphase des Auslasstakts unter Umgehung der Membranpumpe 32, also ohne diese zu durchströmen, über die Abgasleitung 26 zur Auspuffanlage 12. Ebenso schiebt der Kolben 4 das im Zylinder 2 noch vorhandene Abgas aus diesem über die Abgasleitung 26 in die Auspuffanlage 12. Das Frischgas wird hingegen während der Kompression aus der Membranpumpe 32 durch ein dort vorgesehenes Rückschlagventil in die als Druckspeicherleitung vorgesehene und ausgestaltete Frischgasleitung 50 gedrückt, in der es verweilt, bis das Einlassventil 18 und ein eventuell vorhandenes Zusatzventil 54 sich öffnen. Die Frischgasleitung 50 kann somit als Zwischenspeicher angesehen werden, dem das in der Membranpumpe 32 komprimierte Frischgas zugeführt und dort zur Einspeisung in den Brennraum 10 des Zylinders 2 bereitgehalten wird. Die Speicherleitung 50 ist vorzugsweise als kompaktes Volumenelement ausgelegt, um Strömungsverluste, die in langen Rohrleitungen entstehen können, zu minimieren. Darüber hinaus kann die Speicherleitung 50 in Verbindung mit dem unmittelbar am Einlasssystem des Verbrennungsmotors angeschlossenen s.g. Ansaugrohres als Helmholtzresonator ausgelegt werden. Wie bei Saugmotoren üblich, werden durch den Zylinderhubraum und die Länge bzw. Querschnitt des Ansaugrohres Resonanzschwingungen in der Ansaugphase Motordrehzahl abhängig angeregt, die zu Füllungssteigerungen des Motorzylinders genutzt werden. Selbige Effekte können ebenfalls in Verbindung mit dem aus der Ladepumpe vorverdichteten Frischgas umgesetzt werden, allerdings auf höherem Druckniveau.

Die Membranpumpe 32 ist gezielt für einen besonders hohen Wirkungsgrad bei der Umsetzung des vom durch die Stichleitung 30 in das erste Teilvolumen 40 einströmenden Antriebsgases mitgeführten Impulses oder Druckpulses in eine Bewegung der Membran 38 und demzufolge eine Kompression des im zweiten Teilvolumen 42 vorgehaltenen Frischgases bei besonders hoher Lebensdauer der Komponenten ausgelegt. Dabei ist insbesondere auch berücksichtigt, dass grundsätzlich die bewegten Massen der Membran 38 und der für deren Rückstellung vorgesehenen Feder möglichst gering gehalten werden sollten. Um dies zu ermöglichen, ist insbesondere das Federsystem geeignet ausgestaltet, indem die Feder als Blattfeder ausgeführt ist.

Der in FIG. 1 gezeigte Abgasstrang 20 einschließlich der Membranpumpe 32 eignet sich besonders für die Verwendung in der Art einer Abgasladepumpe zur Aufladung von Ein- und Zweizylinderverbrennungsmotoren, wie sie beispielsweise in Zweirädern, ATVs, Motorschlitten, Freizeitgeräten, Flugtriebwerken und Stationärmotoren verwendet werden, aber auch für Mehrzylindermotoren im PKW-Bereich, um beispielsweise vorhandene Turbolader zu unterstützen. Alle diese Verwendungen werden jeweils als eigenständige Erfindungen angesehen.

Der Abgasstrang 20 ist gezielt dafür ausgelegt, eine besonders weitgehende Nutzung des Impulses aus der Abgasdruckwelle zur Kompression des Frischgases in der Frischgasleitung 50 zu ermöglichen. Dazu soll unter anderem auch die Verweildauer des Druckpulses im die Primärseite der Membranpumpe 32 bildenden ersten Teilvolumen 40 weitgehend maximiert und ein vorzeitiges Ab- oder Zurückfließen von Abgas in die Abgasleitung 26, was einen Impulsverlust bedeuten würde, weitgehend unterbunden werden. Um dies zu ermöglichen, ist in die Stichleitung 30 eine Strömungsdiode geschaltet 60, die für ein zur Membranpumpe 32 hin strömendes Fluid einen niedrigeren Strömungswiderstand aufweist als für ein von der Abgasladepumpe abströmendes Fluid. Unter einer "Strömungsdiode" ist dabei allgemein ein Bauteil oder eine Bauteilauslegung zu verstehen, das - in Analogie zu einer elektrischen Diode - eine richtungsabhängige Charakteristik für den Strömungswiderstand für ein durchströmendes Fluid aufweist, wobei insbesondere in einer "Sperrrichtung" ein deutlich höherer Strömungswiderstand gegeben ist als in der entgegengesetzten "Durchgangsrichtung". Die Strömungsdiode 60 kann somit durch eine geeignete Modifikation in der baulichen Ausführung der Stichleitung 30, beispielsweise eine geeignete Innenwandkontur, oder auch durch separat nachgerüstete Bauteile oder Einbauten bereitgestellt sein. Die Sperrrichtung sollte dabei bevorzugt dauerhaft nicht komplett "sperren", da somit ein Entleeren der Ladepumpe verhindert würde, sondern lediglich einen höheren "mittleren" Durchflusswiderstand (analog zum ohmschen Widerstand) besitzen. Dieser so genannte "mittlere" Durchflusswiderstand kann sich jedoch aus mehreren zeitlichen Phasen unterschiedlicher Durchflusswiderstände zusammensetzen, die sowohl vollkommenes Sperren, als auch weitgehendes Öffnen der Stichleitung beinhalten. Beispielsweise wäre ein mögliches Schaltschema der Strömungsdiode ein weitgehendes Öffnen beim Einlaufen der Druckwelle in die Ladepumpe, darauffolgend ein kurzzeitiges Schließen der Strömungsdiode, um den Druck in der Ladepumpe zu halten und letztendlich ein weitgehendes Öffnen der Strömungsdiode, um das Abgas aus der Ladepumpe abfließen zu lassen.

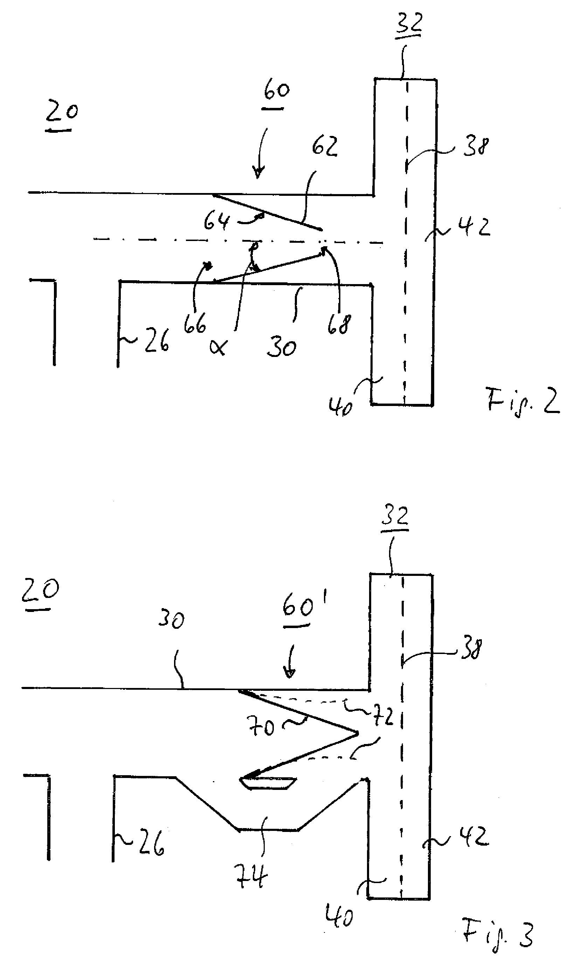

Einige Ausführungsbeispiele für mögliche Ausgestaltungen der Strömungsdiode 60 sind in den ausschnittsweisen Darstellungen der Stichleitung 30 in den FIG. 2 bis 4 gezeigt. Diese Ausführungsbeispiele werden auch unabhängig von der vorliegend vorgesehenen Verwendung im Abgasstrang 20 jeweils für sich genommen als eigenständig erfinderisch angesehen.

Im Ausführungsbeispiel gem. FIG. 2 ist die Stichleitung 30 mithilfe statischer Einbauten, nämlich durch eine integrierte Düse 62, als Strömungsdiode ausgestaltet. In der gezeigten bevorzugten Ausgestaltung ist die Düse 62 dabei mit ihrer Innenfläche 64 in der Art eines Kegelstumpfs mit sich in Richtung zur Membranpumpe 32 hin verringerndem Querschnitt ausgestaltet. Die Düse 62 mit fortlaufender Querschnittsverengung in Richtung zur Membranpumpe 32 hin stellt dabei ein Leitungselement dar, das beim Durchströmen einen verhältnismäßig geringen Druckverlust in Richtung zur Membranpumpe 32 aufweist. Für besonders günstige Strömungsverhältnisse im Auslegungsfall ist dabei für die Düse 62 ein Düsenwinkel (Kegelwinkel) α im strömungsgünstigen Bereich zwischen 10°-35° vorgesehen.

Die Düse 62 ist dabei im Ausführungsbeispiel vergleichsweise nah am Ende der Stichleitung 30 und benachbart zur Membranpumpe 32 als dünnwandiger Kegel eingesetzt und entspricht mit ihrem Eingangsdurchmesser 66 etwa dem Durchmesser der Stichleitung 30. Der Ausgangsdurchmesser 68 der Düse 62 ist hingegen deutlich kleiner gewählt; hinsichtlich der Dimensionierung der Düsenausgangsquerschnittsfläche bezogen auf die Düseneingangsquerschnittsfläche haben sich Werte als vorteilhaft erwiesen, die zwischen 50-75% liegen, primär abhängig von dem angeschlossenen Verbrennungsmotor und dessen Parametern wie Zylinderzahl, Abgasstaudruck, Motordrehzahl, Höhe der Abgasdruckamplituden.

Im alternativen Ausführungsbeispiel gem. FIG. 3 ist die Ausgestaltung der Stichleitung 30 als Strömungsdiode 60 mithilfe dynamischer Einbauten in der Stichleitung 30 vorgesehen. Das Ausführungsbeispiel gem. FIG. 3 zeigt dabei in der Art von passiven dynamischen Einbauten ein zur Bildung der Strömungsdiode 60' in die Stichleitung 30 integriertes Rückschlagventil 70.

Rückschlagventile, insbesondere selbstrückstellende Ventile, erlauben nämlich einen Medienfluss in ausschließlich eine Richtung. In entgegengesetzter Fließrichtung sperren diese Ventile vollkommen. Neben Teller- und Klappenventile zählen auch s.g. Flatter- bzw. Membranventile zu dieser Bauart, wobei besonders bevorzugt vorgesehene Flatterventile hohe Schaltfrequenzen ermöglichen. Das Rückschlagventil 70 im Ausführungsbeispiel gem. FIG. 3 ist als Flatterventil ausgeführt, das im Falle einer Druckbeaufschlagung von der Abgasleitung 26 her (also bei eintreffender Druckwelle aus dem Brennraum 10) selbsttätig öffnet und den Durchfluss freigibt (dieser Fall ist in FIG. 3 durch die strichlierten Linien 72 symbolisiert). Im Rückstromfall, d. h. bei aus der Membranpumpe 32 zurückflutender Druckwelle, schließt das Flatterventil oder Rückschlagventil 70 hingegen eigenständig (passiv), ohne dass es einer externen Ansteuerung bedarf. Selbstverständlich ist analog auch eine Variante denkbar, in der das Rückschlagventil 70 aktiv extern angesteuert wird, so dass das Öffnungs- und Schließverhalten aktiv in die Regelung des Verbrennungsmotors einbezogen werden kann.

In der dargestellten Ausführungsform ist das Rückschlagventil 70 mit einem parallel zur eigentlichen Stichleitung 30 verlaufenden Bypass 74 kombiniert. Dadurch hat die solchermaßen gebildete Strömungsdiode 60'die Eigenschaft, dass bei von der Abgasleitung 26 her eintreffender Druckwelle das Rückschlagventil 70 eigenständig öffnet und somit den kombinierten Fließquerschnitt aus der Summe der Beiträge des Rückschlagventils 70 und den des Bypasses 74 zur Verfügung stellt. Hingegen schließt das Rückschlagventil 70 in "Rückwärtsrichtung", also bei Gasfluss aus der Membranpumpe 32 zur Abgasleitung 26 hin, so dass lediglich durch den Bypass 74 ein Rückfluss stattfinden kann. Diese Konfiguration von Rückschlagventil 70 und Bypass 74 realisiert den angestrebten Effekt, den Abgasdruck in der Membranpumpe 32 länger verweilen zu lassen, indem eine vorzeitige Reflektion der Druckwellen in der Membranpumpe 32 zumindest vermindert wird. Die Strömungsquerschnitte von Rückschlagventil 70 und Bypass 74 sind frei wählbar und können dementsprechend bevorzugt geeignet abhängig von den Betriebsparametern des angeschlossenen Verbrennungsmotors gewählt und an diese angepasst werden. Der Bypass 70 kann einen variabel einstellbaren Querschnitt aufweisen, der sowohl aktiv angesteuert in Abhängigkeit von den Motorbetriebspunkten regelbar ist, als auch passiv selbstregelnd variiert, beispielsweise über den mittleren Systemdruck in Stichleitung. Grundsätzlich erfordern niedrige Motordrehzahlen kleinere Strömungsquerschnitte im Bypass, als hohe Motordrehzahlen. Das Rückschlagventil 70 kann aus mehreren Einzelventilen bestehen.

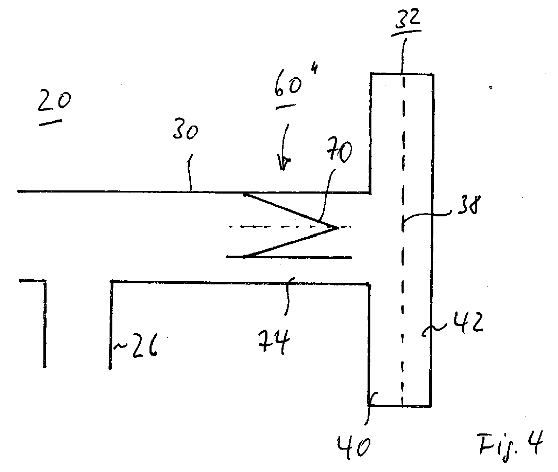

In der alternativen bevorzugten Ausführungsform gem. FIG. 4 ist eine besonders kompakte Bauweise erreichbar, indem unter Verzicht auf eine externe Bypassleitung der Bypass 74 in die Stichleitung 30 integriert ist. Dabei ist nur ein Teil des Strömungsquerschnitts der Stichleitung 30 durch das Rückschlagventil 70 abgedeckt, wobei der verbleibende Anteil des Strömungsquerschnitts als Bypass 74 fungiert. Eine weitere Möglichkeit, Rückschlagventil 70 und Bypass 74 räumlich kompakt zu kombinieren, besteht in der Perforation des Rückschlagventiles 70, d.h. es wird durch Öffnungen im Ventilkörper eine gewünschte Leckage vorgesehen, die den Bypass 74 in dessen Funktion ersetzt. Technisch vorteilhaft sind Flatterventile, deren Ventilplatten aus dünnem Stahlblech oder auch faserverstärkten Kunststoffen bestehen. Solche Rückschlagventile können problemlos am Ende der Stichleitung am Eintritt in den abgasseitigen Gehäusedeckel der Abgasladepumpe integriert werden, da in diesem Bereich entsprechende Flächen zur Unterbringung vorhanden sind und die Abgastemperatur auf niedrigem für Kunststoffe geeignetem Niveau liegen kann.

### Bezugszeichenliste

- 1: Verbrennungsmotor
- 2: Zylinder
- 4: Arbeitskolben
- 6: Pleuel
- 8: Kurbelwelle
- 10: Brennraum
- 12: Auspuffanlage
- 14: Gaseinlasssystem
- 16: Einlassventilsystem
- 18: Einlassventil
- 20: Abgasstrang
- 22: Auslassventilsystem
- 24: Auslassventil
- 26: Abgasleitung
- 28: Verzweigungsstelle
- 30: Stichleitung
- 32: Membranpumpe
- 34: Druckgehäuse
- 36: Innenvolumen
- 38: Membran
- 40,42: Teilvolumen
- 50: Frischgasleitung
- 52: Ladeluftkühler
- 54: Zusatzventil
- 60: Strömungsdiode
- 62: Düse
- 64: Innenfläche
- 66: Eingangsdurchmesser
- 68: Ausgangsdurchmesser
- 70: Rückschlagventil
- 72: Linie
- 74: Bypass
- α: Kegelwinkel

## Patentansprüche

1. Abgasstrang (20) für einen Verbrennungsmotor (1), mit einer zu einer Auspuffanlage (12) führenden Abgasleitung (26), von der eine mit der Primärseite einer Abgasladepumpe (32) verbundene Stichleitung (30) abzweigt, wobei in die Stichleitung (30) eine Strömungsdiode (60, 60', 60") geschaltet ist, die für ein zur Abgasladepumpe (32) hin strömendes Fluid einen niedrigeren Strömungswiderstand aufweist als für ein von der Abgasladepumpe (32) abströmendes Fluid.

2. Abgasstrang (20) nach Anspruch 1, bei dem die Abgasladepumpe (32) sekundärseitig in eine ausgangsseitig mit einem Brennraum (10) eines Zylinders (2) des Verbrennungsmotors (1) verbundene Frischgasleitung (50) geschaltet ist.

3. Abgasstrang (20) nach Anspruch 1 oder 2, bei dem die Stichleitung (30) zur Bildung der Strömungsdiode (60) eine integrierte Düse (62) mit sich in Längsrichtung der Stichleitung (30) gesehen zur Abgasladepumpe (32) hin verringerndem Querschnitt aufweist.

4. Abgasstrang (20) nach Anspruch 3, bei dem die Düse (62) in Form eines Kegelstumpfs mit einem Kegelwinkel (α) von mindestens 10° und höchstens 35° ausgeführt ist.

5. Abgasstrang (20) nach Anspruch 3 oder 4, bei dem die Düse (62) einen Ausgangsflächenquerschnitt von etwa 50 % - 75 % des Eingangsflächenquerschnitts aufweist.

6. Abgasstrang (20) nach einem der Ansprüche 1 bis 5, bei dem die Stichleitung (30) zur Bildung der Strömungsdiode (60') ein integriertes Rückschlagventil (70) aufweist.

7. Abgasstrang (20) nach Anspruch 6, bei dem das Rückschlagventil (70) als Flatterventil ausgestaltet ist.

8. Abgasstrang (20) nach Anspruch 6 oder 7, bei dem das Rückschlagventil (70) parallel zu einem Bypass-Kanal (74) geschaltet ist.

9. Abgasstrang (20) nach einem der Ansprüche 1 bis 8, dessen Abgasladepumpe (32) als Membranpumpe (32) ausgeführt ist.

10. Abgasstrang (20) nach Anspruch 9, dessen Membranpumpe (32) ein Druckgehäuse (34) umfasst, dessen Innenvolumen (36) über eine Anzahl von elastisch verformbaren Membranen (38) in eine Mehrzahl von gasseitig voneinander getrennten Teilvolumina (40, 42) aufgeteilt ist, wobei die oder jede Membran (38) derart mit einer Vorspannkraft beaufschlagt ist, dass im drucklosen Zustand das die Primärseite bildende Teilvolumen (40) im Rahmen der Verformbarkeit der oder jeder Membran (38) einen Minimalwert aufweist.

11. Abgasstrang (20) nach Anspruch 10, bei dem zur Aufbringung der Vorspannkraft auf die Membran (38) eine Blattfeder als Rückstellfeder vorgesehen ist.

12. Verwendung eines Abgasstrangs (20) nach einem der Ansprüche 1 bis 11 in einem Kraftfahrzeug.

13. Verwendung eines Abgasstrangs (20) nach einem der Ansprüche 1 bis 11 in einem Zweirad.

14. Verwendung eines Abgasstrangs (20) nach einem der Ansprüche 1 bis 11 für einen Einzylindermotor.

15. Verwendung eines Abgasstrangs (20) nach einem der Ansprüche 1 bis 11 für einen Zweizylindermotor.
